**Europäisches Patentamt**

(19) **European Patent Office**

**Office européen des brevets**

(11) Numéro de publication: **0 014 170**
**B1**

(12) **FASCICULE DE BREVET EUROPEEN**

(45) Date de publication du fascicule du brevet:
**17.08.83**

(51) Int. Cl.³: **A 01 K 53/00**

(21) Numéro de dépôt: **80430003.6**

(22) Date de dépôt: **15.01.80**

(54) **Plateau d'élevage et de nourrissement d'abeilles commandé de l'extérieur pour apiculture intensive.**

(30) Priorité: **17.01.79 FR 7901306**

(73) Titulaire: **Rocchesani, Nicolas, Soveria 20250 Corte (FR)**

(43) Date de publication de la demande:
**06.08.80 Bulletin 80/16**

(72) Inventeur: **Rocchesani, Nicolas, Soveria 20250 Corte (FR)**

(45) Mention de la délivrance du brevet:
**17.08.83 Bulletin 83/33**

(84) Etats contractants désignés:
**AT DE GB IT**

(56) Documents cités:
**CH-A-99 214**
**DE-C-483 548**
**FR-A-449 221**
**FR-A-674 497**
**FR-A-1 117 153**
**FR-A-1 252 990**
**FR-A-2 372 654**
**GB-A-155 746**
**GB-A-483 678**
**US-A-1 607 659**
**US-A-3 978 534**

Il est rappelé que: Dans un délai de neuf mois à compter de la date de publication de la mention de la délivrance du brevet européen touᵗe personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

# Plateau d'élevage et de nourrissement d'abeilles commandé de l'extérieur pour apiculture intensive

L'invention concerne un dispositif permettant le nourrissement et l'élevage précoce, donc sélectif d'une à quatre colonies, les opérations s'effectuant de l'extérieur. Le dispositif comprend un bac à liquide, désservant deux ou quatre auges et dont l'accès par les abeilles est commandé par quatre ou huit tirettes, un guide sirop escamotable adapté à un conduit permet le nourrissement de l'extérieur. Le dispositif objet de l'invention comprend éventuellement un emplacement destiné à recevoir de la nourriture solide, pouvant être recouvert d'une tôle rigide ou d'un grillage suivant les besoins.

En apiculture les plateaux diviseurs et les nourrisseurs permettent l'élevage et le nourrissement des colonies d'abeilles.

Les nourrisseurs connus sont des récipients généralement placés sur les ruches dans lesquels les abeilles viennent chercher leur nourriture soit par une rampe et une auge longitudinale tel que le nourriseur couvrecadres déjà connu par FR-A-1 252 990, qui montre un plateau à plusieurs éléments en forme de coffrets; le plateau a la dimension du dessus de la ruche et est placé à la place du couvre-cadres habituel. Une fente longitudinale située sur un bord de la face inférieure de l'élément nourrisseur à liquide permet aux abeilles de pénetrer dans une auge contigue au bac contenant le liquide. Il est aussi connu d'effectuer une entree par une cheminée centrale placée sur le fond du nourrisseur. Ces différents nourrisseurs présentent des difficultés de remplissage et de manipulations, et ne peuvent nourrir qu'une seule colonie à la fois. L'état de la technique antérieure est représenté aussi par les documents GB-A-483 678, US-A-1 607 659, FR-A-674 497, FR-A-449 221, DE-C-483 548 et CH-A-99 214. Les plateaux diviseurs n'ont qu'une fonction d'élevage, ils séparent les colonies et les orientent par des entrées opposées.

La présente invention a pour but de remédier à ces inconvénients. L'invention telle qu'elle est caractérisée dans les revendications résout le probléme consistant à créer un seul dispositif intercalaire ou superposable, permettant le nourrissement et l'élevage précoce d'une à quatre colonies; les opérations s'effectuent de l'extérieur.

Les avantages obtenus grâce à cette invention consistent en ceçi: un élevage précoce et donc sélectif est obtenu, car le fait que les opérations s'effectuent de l'extérieur permet d'intervenir quelles que soient les conditions atmosphériques. Le groupement de quatre colonies autour d'un seul dispositif permet une concentration de chaleur plus importante et donc un meilleur hivernage et developpement de ces mêmes colonies.

Le dispositif donne la possibilité d'une alimentation en liquide ou solide dans des régions froides. Le nourrissement peut se faire sur un grand nombre de ruches penaant un temps très court. Le dispositif réduit le nombre des opérations, tel que transport de cadres, de ruchettes de fécondations, de cadrons, correspondant à la période de l'essaimage naturel. Il permet la naissance de mâles précoces et de reines précoces ainsi que le retour des reines après fécondation.

L'invention est exposée ci-après plus en détail à l'aide de dessins.

La figure 1 est une vue en perspective d'un plateau d'élevage et de nourrissement par l'extérieur pour une ou deux colonies suivant l'invention. A l'hivernage il prend la place de toit des ruches, en étant recouvert d'un isolant et d'une tôle.

La figure 2 est une coupe de la figure 1 suivant l'invention.

La figure 3 représente l'élément (5) des figures 1-4-6 suivant l'invention.

La figure 4 est une vue en perspective d'un plateau d'élevage et de nourrissement par l'extérieur pour 2 à 4 colonies suivant l'invention.

La figure 5 est une coupe de la figure 4 suivant l'invention.

La figure 6 est une vue en perspective d'une variante des figures 1 et figures 4.

La figure 7 est une tirette perforée pour la communication des odeurs.

La figure 8 est une tirette avec grille à reines.

La figure 9 est une tirette étanche.

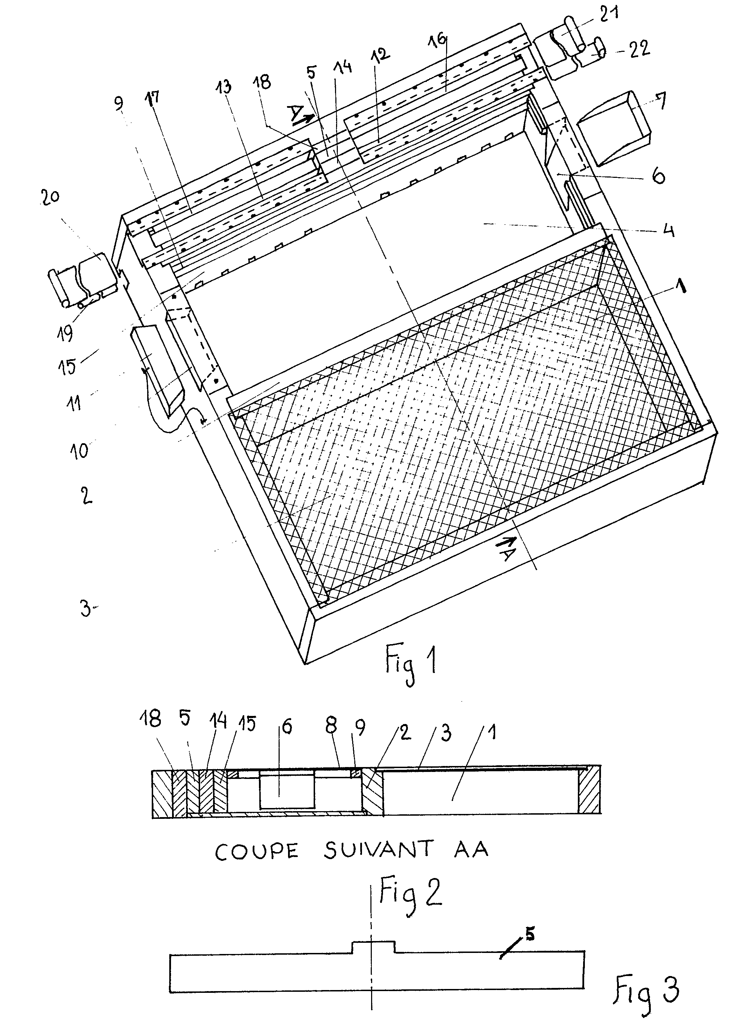

Le plateau d'élevage et de nourrissement par l'extérieur représenté à la figure 1 est constitué par: un emplacement 1, limité par les parois du plateau et une partition 2. La nourriture solide est posée sur les cadres de la ruche, les abeilles sont donc en contact direct avec la nourriture solide qui n'est donné aux abeilles qu'en période hivernale. L'emplacement (I) sera recouvert d'une tôle (3) étanche, sauf le jour de la transhumance où cette tôle (3) sera remplacée par un grillage pour éviter l'étouffement des abeilles. Le nourrissement solide étant terminé, on pose sur les cadres à la partie inférieure de l'emplacement (I) une tôle afin que les abeilles ne construisent pas leurs rayons dans l'emplacement (I). Lorsque l'activité reprend au printemps l'apiculteur peut utiliser l'emplacement (I) pour l'élevage des reines, avec pose de lattes cupules, et à ce moment la tôle ou la toile de jute reposant sur les cadres est retirée. Un bac 4 destiné à recevoir de la nourriture liquide dont le fond étanche est fixé à la partition 2, aux parois du plateau et à la latte 5 représentée à la figure 3.

Le bac 4 comporte un conduit incliné 6 dans lequel s'engage le guide-sirop 7 par lequel s'effectuera le remplissage. Après utilisation le guide-sirop 7 obturera le conduit 6. Le bac 4 sera recouvert par un couvercle 8 représenté à la figure 2, reposant sur les lattes 9 dont la légère inclinaison vers l'entrée 10 obturable par la porte 11, permettra le passage vers l'extérieur des abeilles de la ruche supérieure. Deux auges 12 et 13, séparées par un bout de latte 14, sont délimitées par la latte 5 (figure 3), les parois du plateau et la latte dentelée 15 qui permet le passage du sirop du bac vers les auges 12 et 13. Deux rampes 16 et 17 qui permettent l'accès des abeilles de la ruche inférieure aux auges 12 et 13, sont séparées en leur centre par un bout de latte 18 et délimitées par les parois du plateau et la latte 5.

La latte 5 est d'une hauteur inférieure à la latte dentelée 15 pour le passage des abeilles sauf dans sa partie centrale où elle possède une saillie rectangulaire affleurant les bouts des lattes 14 et 18, et d'une largeur identique à celles-ci.

Une tirette à glissière 19, qui, en position fermée, a sa butée au bas de la latte 18, empêche le passage des abeilles de la colonie inférieure à la rampe 17.

Une tirette à glissière 20 ouverte permet l'accès de la colonie supérieure à l'auge 13.

Une tirette à glissière 21, qui en position fermée est en butée contre des lattes 18-5-14, empêche l'accès de la colonie supérieure à l'auge 12.

Une tirette à glissière 22, en position ouverte, permet l'accès de la colonie inférieure à la rampe 16 et à l'auge 12 par le passage de la latte 5 (Fig. 3).

Le dispositif figure 1 suivant l'invention ayant son bac et son emplacement 1 fermés ainsi que les tirettes 19 et 21, avec l'entrée d'abeilles 10, remplit les fonctions de plateau diviseur et nourrisseur pour deux ruches. En position intercalaire il permettra l'élevage de reines précoces ainsi que la naissance de faux-bourdons. Ceci s'explique par la facilité d'un nourrissement continu de l'extérieur.

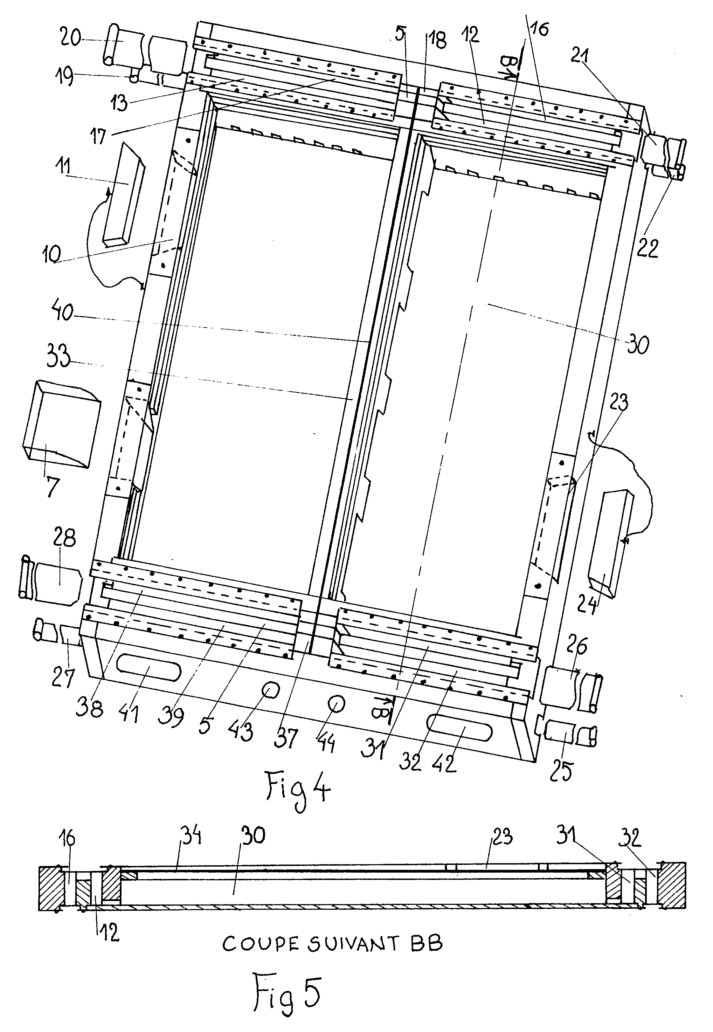

L'élevage se fera dans la ruche supérieure, la ruche inférieure lui apportera une chaleur régulière. La naissance de reines précoces permettra de mettre en fonction un élevage continu d'essaims par le dispositif représenté à la figure 4.

La figure 4 représente suivant l'invention un dispositif d'élevage de 2 à 4 colonies ainsi que leur nourrissement simultané en nourriture liquide. Cet élevage doit conduire à la répartition des essaims fécondés en ruches de rapport, superposées ou juxtaposées.

Ce plateau de nourrissement par l'extérieur, facile à réaliser sans déranger les abeilles, est caractérisé par un grand bac 30 délimité par les deux parois longitudinales du plateau et les lattes 5 représentées à la figure 3.

Le bac 30 est partitionné dans le sens de la longueur par un liteau 33 denteIé pour le passage du sirop, portant sur le dessus une rainure centrale 40 se prolongeant jusqu'aux lattes 18 et 37, et destinée à recevoir une partition de la ruche supérieure en vue d'isoler deux colonies. Ce bac est recouvert, de part et d'autre du liteau 33, par un couvercle (34). Une rainure diamétralement opposée à la rainure centrale 40 au dessous du plateau recevant une partition est destinée à isoler les deux colonies inférieures.

Ce dispositif comporte:

Deux entrées 10 et 23 situées de part et d'autre du plateau afin de permettre aux reines après leur sortie nuptiale le retour à leur colonie.

Quatre auges 12-13-31-38 avec leur tirette respectives 20-21-31-38.

Quatre rampes 16-17-32-39 avec leurs tirettes respectives 22-19-25-27.

Deux fenêtres 41 et 42, obturables par un volet grillagé, destinées au contrôle de l'accès des abeilles aux auges ou à la vaporisation de sirop directement dans les rampes pour attirer les abeilles plus rapidement aux auges. Deux fenêtres identiques sont symétriquement disposées.

Deux trous 43 et 44, obturables, sont destinés au renforcement d'une colonie aux dépens d'une autre plus forte. Deux trous obturables identiques symétriquement opposés auront la même fonction.

L'accès de chaque colonie à l'auge est conditionné par l'ouverture d'une seule tirette, soit celle du haut ou celle du bas. Les quatre tirettes restant fermées assurent avec la partition 33 et les tôles du bac 30 l'étanchéité du plateau propre à l'isolement des ruches ou essaims superposés.

Exemple de fonctionnement des tirettes, le plateau étant en fonction de nourrissement de 4 essaims et toutes les tirettes étant fermées:

On ouvre la tirette 20, les abeilles de la colonie supérieure descendent à l'auge 13.

On ouvre la tirette 26, les abeilles de l'autre colonie supérieure descendent à l'auge 31.

On ouvre la tirette 22, les abeilles de la colonie inférieure montent à l'auge 12 par la rampe 16.

On ouvre la tirette 27, les abeilles de l'autre colonie inférieure montent à l'auge 38 par la rampe 39.

Le dispositif toujours suivant l'invention, placé en intercalaire pourra servir à la production intensive de miel par superposition de ruches peuplées et de hausses garnies.

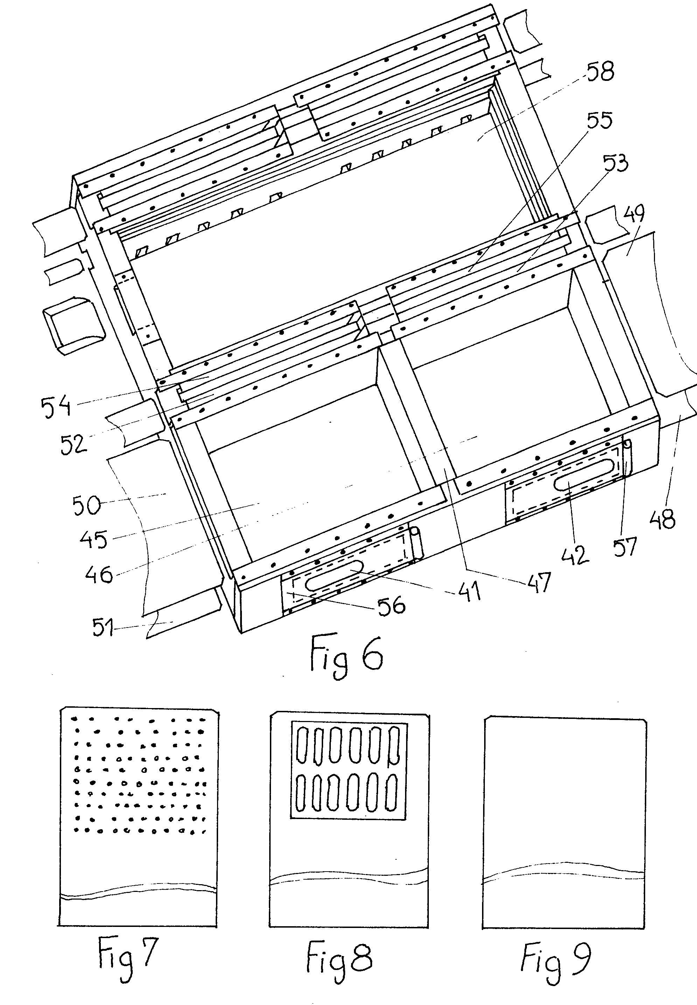

Le dispositif figure 6 suivant l'invention est une variante des dispositifs des figure 1 et figure 4. Plus adapté aux régions froides au long hivernage, tout en conservant ses caractères essentiels en toutes régions, il est caractérisé par quatre auges dont deux auges centrales 54 et 55, celles-ci étant d'avantage accessibles par les abeilles en région froide.

Deux emplacements 45 et 46 peuvent en période hivernale recevoir de la nourriture solide. En élevage les tirettes (figures 7 – 8 et 9) (deux jeux) facilitent les réunions des colonies sans avoir besoin de sortir les ruches.

Les fenêtres obturées par les tirettes 56 et 57 et pratiquées sur le côté de chaque emplacement (45, 46) permettent de placer au printemps des cages munies de cocons à reine mûrs à fin d'éclosion, ou des reines dans leur cage en vue d'une distribution plus rapide aux essaims nouvellement crées sur les ruches des dispositifs 1 et 4. Ce dispositif comprend: un bac à sirop 58, deux auges 54 et 55, deux rampes 52 et 53, deux emplacements 45 et 46 partitionnés par le liteau 47, comportant chacun une fenêtre obturable 41 et 42 pratiquées sur les tirettes 56 et 57, ces dernières obturant des fenêtres plus grandes indiquées en pointillés. L'emplacement des tirettes des figures 7—8 et 9 est indiqué en 48-49-50 et 51. La présente invention peut être utilisée sur tous les modèles de ruches, realisées indiffèremment en bois ou en matière plastique. Elle pourra servir au nourrissement solide ou liquide de plusieures colonies à l'élevage d'essaims et de reines et à la production intensive de miel.

**Revendications**

1. Plateau à compartiments pour ruches en vue de nourrir des abeilles grâce à un approvisionnement en nourriture liquide et éventuellement solide les nourritures solide et liquide étant, disposées dans des compartiments distincts situés côté à côté (1, 4; 30; 45, 46, 58), accessibles pour les abeilles par une ouverture inférieure, obturable par un volet coulissant en ce qui concerne la nourriture solide et par une auge pour la nourriture liquide, l'accès à l'auge se faisant par le bas le long et par dessus une latte (5) servant de bordure à l'auge et dont la hauteur est réduite par rapport à celle du plateau dans lequel elle est disposée, caractérisé en ce que, afin de permettre le nourrissement et l'élevage précoce de une ou plusieurs colonies:

a) plusieurs auges (13, 12; 31, 38; 54, 55) sont prévues attenantes à un même bac à nourriture liquide (4, 30, 58), sont groupées par pair, alignées sur un seul ou sur les deux côtés opposés du bac (4, 30, 58), et sont également pourvues d'un accès supérieur au moins une paire d'auges étant disposée sur un côté du plateau, les extrémités latérales et externes des auges étant situées sur les côtés du plateau perpendiculaires au côté précité;

b) chaque auge est munie, sur ses accès supérieure et inférieure, respectivement, d'un volet-tirette coulissant (19, 20; 21, 22; 25, 26; 27, 28), dont la manoeuvre sélective permet de contrôler l'accès à l'auge soit de la ruche supérieure, soit de la ruche inférieure le cas échéant ou encore les échanges entre ruches, ces tirettes étant manoeuvrable de l'extérieur sur les côtés perpendiculaires susdits du plateau;

c) sur ces mêmes côtés perpendiculaires sont situés un conduit incliné (6), servant de logement à un guide-sirop escamotable (7), en forme de tiroir, destiné au remplissage du bac à liquide.

2. Plateau selon la revendication 1, caractérisé en ce que la séparation des auges, dans une même paire, est effectuée par un bout de latte (14) et par une partie saillante médiane de la latte (5), dont les prolongements, de part et d'autre de cette saillie, servant de séparation entre les auges et leurs rampes respectives, chaque auge étant ainsi délimitée par un côté perpendiculaire du plateau en ce qui concerne son extrémité externe, par la latte (5) de hauteur réduite sur ses prolongements vis-à-vis des autres lattes, par le bout de latte (14) et par une latte dentelée (15), qui permet le passage du liquide de son bac vers l'auge, et que des rampes (16, 17; 32, 39; 52, 53) sont prévues pour chaque auge le long de la latte (5), les rampes d'une même paire d'auges étant séparées par un bout de latte (18) d'égale largeur et de même hauteur que le bout de la latte (14) et la saillie de la latte (5), avec lesquels elle est alignée.

3. Plateau selon la revendication 1 ou 2, caractérisé en ce que disposé en intercalaire entre une ruche supérieure et une ruche inférieure, il comporte, en partant d'un côté du plateau, une paire d'auges (12, 13) avec rampes (16, 17), un bac à nourriture à liquide attenant (4) avec son conduit (6) de remplissage, la latte dentelée (15) séparant le bac de la paire d'auges, et un emplacement (1) à nourriture solide, séparé du bac (4) par une latte transversale (2), une ouverture (10) avec son bouchon (11) étant prévue sur la face supérieure d'un côté du plateau, séparée du bac à nourriture liquide par un couvercle (8) incliné disposé sur ce bac.

4. Plateau selon la revendication 3, caractérisé en ce que la paire d'auges (12, 13) est munie sur ses faces supérieures et inférieures de volets-tirettes (20, 21; 19, 22), dont la manoeuvre sélective permettra l'accès des colonies supérieure et inférieure à leur auge respective.

5. Plateau selon l'une des revendications précédentes, caractérisé en ce que le compartiment à nourriture solide (1) est recouvert par une tôle (3).

6. Plateau selon la revendication 1 ou 2, caractérisé en ce qu'il est disposé en intercalaire entre une ruche supérieure, séparée en deux colonies par une partition, et une ruche inférieure identique, et en ce qu'il comporte un bac (30) à nourriture liquide, séparé longitudinalement en deux par un liteau (33) dentelé pour le passage du liquide, et muni longitudinalement respectivement sur ses faces supérieure et inférieure, d'une rainure (40) recevant la partition de la ruche contiguë, une paire d'auges (12, 13, 31, 38) étant disposée sur chaque côté du plateau perpendiculaire à ce liteau, si bien que chaque auge d'une paire se trouve de part et d'autre du liteau (33) dentelé, et sert à l'approvisionnement des colonies correspondantes inférieure et supérieure, simultanément avec l'auge de l'autre paire, située en vis-à-vis du même côté du liteau (33).

7. Plateau selon la revendication 6, caractérisé en ce que chaque paire d'auge d'auges (12, 13; 31, 38) avec rampes (16, 17; 32, 39) est munie sur ses faces supérieure et inférieure de volets-tirettes coulissants (20, 21; 19, 22, 26, 28; 25, 27) dont la manoeuvre sélective permettra l'accès des colonies à leur auge respective ou encore les é échanges entre colonies.

8. Plateau selon la revendication 6 ou 7, caractérisé en ce qu'il comporte deux ouvertures (10, 23) avec leurs bouchons (11, 24) situées sur les faces supérieures des côtés du plateau et séparées du bac (30) par un couvercle (34) situé de part et d'autre du liteau (33).

9. Plateau selon l'une des revendications 6 à 8, caractérisé en ce qu'il comporte deux fenêtres (41, 42) obturables et deux trous (43, 44), obturables situés sur les côtés du plateau donnant dans les rampes (16, 17, 32, 39), permettant le controle de l'accès des abeilles aux anges et les échanges entre colonies.

10. Plateau selon la revendication 1, caractérisé en ce, en sus de la paire d'auges située sur un côté du plateau, il comporte une paire d'auges centrales (54, 55) avec rampes (52, 53), attenante à un bac à nourriture liquide (58).

11. Plateau selon la revendication 10, en ce qu'il se caractérise par deux compartiments à nourriture solide (45, 46), contigüs aux rampes (52, 53), les deux compartiments (45, 46) étant séparés par un liteau (47) et étant munis chacun d'une fenêtre respective (41, 42) obturale par des tirettes (56, 57), pour unes elles même de fenêtres plus petites, aussi obturables.

12. Plateau selon la revendication précédente, caractérisé en ce que les deux compartiments (45, 46), sont munis sur leurs faces supérieures et inférieures de volets-tirettes (48, 49, 50, 51) pouvant être opâques, perforées, grilles à reines selon les opérations envisagées.

13. Plateau selon l'une des revendications précédentes, caractérisé en ce que il peut être disposé à la partie supérieure d'une ruche, muni alors d'une tôle qui le recouvre.

**Patentansprüche**

1. Kasten mit Räumen zur Fütterung der Bienen durch Versorgung mit flüssigem Futter beziehungsweise mit Trockenfutter, wobei diese Futtersorten getrennt in zwei nebeneinanderliegenden Räumen (1, 4; 30, 45; 46, 58) sind, den Bienen zugänglich durch eine untere Öffnung, welche verstopft wird einerseits durch eine schiebbare Platte für das Trockenfutter, andererseits durch einen Behälter für das flüssige Futter, der von unten über einer den Rand des Behälters bildenden Leiste (5) zu erreichen ist und dessen Höhe geringer ist als die Höhe des Kastens, die Fütterung und die vorzeitige Bienenaufzucht von einem oder von mehreren Schwärmen bezwekkend, dadurch gekennzeichnet,

a) daß dicht beim gleichen Trog fürs flüssige Futter mehrere Behälter (13, 12; 31, 38; 54, 55) vorgesehen sind, welche von oben zugänglich paarweise angeordnet an einer oder an beiden entgegengesetzten Seiten (4, 30, 58) des Trogs ausgerichtet sind, wobei wenigstens eines von diesen Paaren, dessen äußerliche Seiten auf die vorher angegebene Kastenseite senkrecht sird, an einer Kastenseite aufgestellt ist;

b) daß jeder Behälter an dessen oberem und unterem Zugang jeweils eine schiebbare Platte (19, 20; 21, 22; 25, 26; 27, 28) aufweist, deren selektive Schaltung gestattet, den Zugang der Bienen vom oberen und vom unteren Bienenstock zum Behälter oder sogar den Verkehr unter Bienenstöcken zu beaufsichtigen; die Schieber an den obengenannten senkrechten Kastenseiten sind von außen bedienbar;

c) daß an jeder senkrechten Kastenseite ein schräg gestellter Kanal (6) ist, der zum Sitz einer mit Führung versenkbaren Vorrichtung (7) dient, in Form eines Schubfaches, und fürs Füllen des Trogs mit flüssigem Futter bestimmt.

2. Futterkasten nach Patentanspruch 1, dadurch gekennzeichnet, daß für dasselbe Paar Behälter die Scheidung in einer Leiste (14) und im hervortretenden mittleren Teil der Leiste (5) besteht, deren Enden auf beiden Seiten dieses mittleren Teils als Trennung zwischen den Behältern und den jeweiligen Zugangsrampen dienen, wobei jeder Behälter seitlich und äußerlich durch eine senkrechte Kastenseite, durch die Leiste (5), welche an ihren Enden weniger hoch ist als die anderen Leisten, durch das Stück Leiste (14) und durch eine gezackte Leiste (15), die die Flüssigkeit vom Trog zum Behälter zu führen gestattet, abgegrenzt ist, und daß, jedem Behälter entsprechend, Zugangsrampen (16, 17; 32, 39; 52, 53) längs der Leiste (5) sind, wobei die Rampen eines Paares voneinander getrennt sind durch ein Stück Leiste (18), das so breit und hoch ist wie das Stück Leiste (14) und der hervortretende Teil der Leiste (5), der mit den anderen Leisten in Reihe gestellt ist.

3. Futterkasten nach Patentansprüchen 1 oder 2, dadurch gekennzeichnet, daß er zwischen einem oberen und einem unteren Bienenstock angeordnet ist und von einer Kastenseite an aus einem Paar Behälter (12, 13) mit Zugangsrampen (16, 17) aus einem dabeiliegenden Trog für flüssiges Futter mit dessen Füllungskanal (6), aus der den Trog vom Paar Behälter trennenden gezackten Leiste (15) und aus einem Trockenfutterraum (1), welcher vom Trog (4) durch eine Querleiste (2) getrennt ist, besteht; eine Öffnung (10) mit ihrem Zapfen (11) ist auf der oberen Fläche einer Kastenseite vorausgesehen und vom Trog für flüssiges Futter durch einen auf diesem Trog schräg gestellt angeordneten Deckel getrennt.

4. Futterkasten nach Patentanspruch 3, dadurch gekennzeichnet, daß das Paar Behälter (12, 13) an dessen oberen und unteren Seiten mit schiebbaren Platten (20, 21; 19, 22) versehen ist, deren selektive Schaltung den Zugang der oberen und unteren Bienenschwärme zu den jeweiligen Behältern gestattet.

5. Futterkasten nach einem der vorher angegebenen Ansprüche, dadurch gekennzeichnet, daß der Trockenfutterraum (1) mit einer Blechplatte (3) zugedeckt ist.

6. Futterkasten nach Patentanspruch 1 oder 2, dadurch gekennzeichnet, daß er zwischen einem oberen Bienenstock, welchen eine Teilung in zwei Bienenschwärme teilt, und einem ähnlichen unteren Bienenstock angeordnet ist, und daß er einen Trog für das flüssige Futter (30) besitzt, der der Länge nach in zwei Räume geteilt ist durch eine gezackte Leiste (33), welche zum Durchfließen der Flüssigkeit geeignet ist und an ihrer oberen und unteren Seite in der Längsrichtung jeweils mit einer Nute (40) für die Teilung des angrenzenden Bienenstocks ausgestattet ist, wobei jedes Paar Behälter (12, 13, 31, 38) auf einer der zur Leiste (33) senkrechten Kastenseiten ist, so daß zwei Behälter eines Paares sich beiderseits der gezackten Leiste (33) befinden und gleichzeitig mit den gegenüberliegenden Behältern des anderen Paares zur Versorgung des entsprechenden unteren oder oberen Bienenstocks dient.

7. Futterkasten nach Patentanspruch 6, dadurch gekennzeichnet, daß jedes Paar Behälter (12, 13; 31, 38) mit den entsprechenden Zugangsrampen (16, 17; 32, 39) an seiner oberen und an seiner unteren Seite mit schiebbaren Führungsplatten (20, 21; 19, 22; 26, 28; 25, 27) versehen ist, deren selektive Schaltung den Zugang der Bienenschwärme zum jeweiligen Behälter oder auch die Austäusche unter den Schwärmen gestattet.

8. Futterkasten nach Patentanspruch 6 oder 7, dadurch gekennzeichnet, daß er auf den oberen Flächen der Kastenseiten zwei Öffnungen (10, 23) und ihre Zapfen (11, 24) aufweist, die vom Trog (30) durch einen beiderseits der Leiste (33) liegenden Deckel (34) getrennt sind.

9. Futterkasten nach Patentanspruch 6 bis 8, dadurch gekennzeichnet, daß er an den nach den Zugangsrampen (16, 17, 32, 39) liegenden Kastenseiten zwei verschiebbare Schiebefenster (41, 42) und zwei verschließbare Lücken (43, 44) aufweist, welche bezwecken, den Zugang der Bienen zu den Behältern und die Austäusche zwischen Bienenschwärmen in Aufsicht zu nehmen.

10. Futterkasten nach Patentanspruch 1, dadurch gekennzeichnet, daß er außer dem an einer Kastenseite liegenden Paar Behälter zwei zentrale Behälter (54, 55) mit Zugangsrampen (52, 53) aufweist, die an einen Trog fürs flüssige Futter angrenzen.

11. Futterkasten nach Patentanspruch 10, dadurch gekennzeichnet, daß er aus zwei Trockenfutterräumen (45, 46) besteht, die durch eine Leiste (47) getrennt sind, an die Zugangsrampen (52, 53) angrenzen und jeweils ein durch Schieber (56, 57) verschließbares Schiebefenster (41, 42) aufweisen, wobei jedes Schiebefenster mit einem ebenso verschließbaren kleineren Fenster versehen ist.

12. Futterkasten nach dem letzten Anspruch, dadurch gekennzeichnet, daß an den oberen und unteren Seiten der beiden Räume (45, 46) undurchsichtige oder durchlöcherte oder bei Bedarf als Königinnengitter dienende schiebbare Führungsplatten (48, 49, 50, 51) ausgestattet sind.

13. Futterkasten nach einem der vorher angegebenen Ansprüche, dadurch gekennzeichnet, daß er am oberen Teil eines Bienenstocks angebracht und dann mit einer Blechplatte bedeckt werden kann.

**Claims**

1. Divided plate for hives with a view to feeding the bees with liquid or eventually solid food, the solid or liquid food being placed in distinctive side-to-side compartments (1, 4, 30, 45, 46, 58) accessible for the bees by an opening in the base, and being closed by a movable slide door for the solid food, and by a trough for the liquid food, the access to the trough being possible beneath, along and over a lath (5) which defines a trough lip and whose height is reduced with respect to the height of the plate in which it is placed, so as to permit the feeding of one to four colonies and characterised by the fact that:

a) several troughs (13, 12, 31, 38, 54, 55) are provided for, contiguous to a common reservoir of liquid food; they are grouped by twos, aligned on one or the two opposite sides of the reservoir (4, 30, 58), and they are equally provided with an upper access, at least a pair of troughs being disposed on one side of the plate, the lateral and outwars ends of the troughs being located on the sides of the plate at right angle to the above mentionned side;

b) each trough is provided on its upper and lower access, respectively with movable slide door (19, 20, 21, 22, 25, 26, 27, 28) whose selective handling permits the checking of the access to the trough either from the upper hive or from the lower one or even the exchanges between hives, these movable slides being operated from outside the hive on the abovementionned perpendicular sides of the plate;

c) on these very perpendicular sides, there is a slanted conduit (6) used as a lodging for a removable syrup-guide, shaped like a drawer (7) meant for the refilling of the reservoir.

2. Plate according to the first revendication characterised by the fact that the separation of the troughs, in a same pair, is made by a piece of lath (14) and by a protruding part median to the lath, whose extensions, on either side of protrusion, are meant to separate the troughs from their respective ramp, each trough being thus delimited by a perpendicular side of the plate for its outward extremity, by the lath (5) of reduced height on its extension with respect to the other laths, by the piece of lath (14) and by an indented lath (15) which premits the liquid to flow from the reservoir to the trough; and that ramps (16, 17, 32, 39, 52, 53) are provided for each trough along the lath (5), the ramps of a same pair of troughs being separated by a piece of lath (18) of equal width and of equal height with the piece of lath (14) and the protruding lath (5) with which it is aligned.

3. Plate according to the first or second revendication, characterised by the fact that, being inserted between an upper and a lower hive, it is composed (starting from one side of the plate) of a pair of troughs (12, 13) with ramps (16, 17), a continuous reservoir for liquid food (4) with its refilling conduit (6), the indented lath (15) separating the reservoir from the pair of troughs, and a place (1) for the solid food separated from the reservoir (4) by a transversal lath (2); an opening (10) with its closing device (11) being provided for on the upper face, on one side of the plate, separated from the reservoir by a slanted lid (8) placed on the reservoir.

4. Plate according to the third revendication, characterised by the fact that the pair of troughs (12, 13) is provided on its upper and lower faces with sliding doors (20, 21, 19, 22) whose selective handling will permit the upper and lower colonies to reach their respective trough.

5. Plate according to one of the revendications above, characterised by the fact that the solid food compartment (1) is covered with a piece of iron sheet (3).

6. Plate according to the first revendication (or the second as well), characterised by the fact that it is inserted between an upper hive, separated into two colonies by a division, and an identical lower hive, and by the fact that it is provided with a liquid food reservoir (30), separated longitudinally into two parts by an idented batten (33) to permit the flowing of the liquid, and provided longitudinally and respectively on its upper and lower faces with a groove (40) receiving the division of the contiguous hive; a pair of troughs (12, 13, 31, 38) being disposed on either side of the plate at right angle to this batten, so that each trough in a pair is located on either side of the indented batten, and is meant for the feeding of their corresponding upper and lower colonies, simultaneously with the trough of the other pair, being opposite on the same batten (33).

7. Plate according to the sixth revendication characterised by the fact that each pair of troughs (12, 13, 31, 38) with ramps (16, 17, 32, 39) is provided on its lower and upper faces with sliding doors (20, 21, 19, 22, 26, 28, 25, 27) whose selective handling will permit the access of the colonies to their respective trough or even the exchanges between colonies.

8. Plate according to the sixth or seventh revendication characterised by the fact that it is provided with two opening (10, 23) with their closing devices (11, 24) located on the upper faces of the plate sides and separated from the reservoir (30) by a lid (34) located on either side of the batten (33).

9. Plate according to the sixth down to the seventh and eighth revendication characterised by the fact that it is provided with two windows (41, 42) and two holes (43, 44) both windows and holes with their closing devices, and which are located on the plate side looking on the ramps (16, 17, 32, 39) permitting the control on the access of the bees to the troughs and the exchanges between the colonies.

10. Plate according to the first revendication characterised by the fact that in addition to the pair of troughs situated on one side of the plate, it is provided with a pair of central troughs (54, 55) with ramps (52, 53) contiguous to a reservoir for liquid food (58).

11. Plate according to the tenth revendication characterised by the fact that two compartments (45, 46) contiguous to the ramps (52, 53), the two compartments (45, 46) being separated by a batten (47), each being respectively provided with a window which can be obturated by slides (56, 57), themselves being provided with smaller windows that can also be closed.

12. Plate according to the previous revendication characterised the fact that the two compartments (45, 46) are provided on their lower and upper faces with sliding doors (48, 49, 50, 51) which can be opaque, perforated, or which can be used as cells for queen-bees according to the planned operations.

13. Plate according to the previous revendications, characterised by the fact that it can be placed on the upper part of a hive, provided, then, with an iron sheet covering it.

Fig 1

COUPE SUIVANT AA

Fig 2

Fig 3

Fig 4

COUPE SUIVANT BB

Fig 5

Fig 6

Fig 7

Fig 8

Fig 9